# EUROPEAN PATENT APPLICATION

(11) **EP 4 155 436 A1**
(43) Date of publication of application: **29.03.2023**
(21) Application number: 21198544.5
(22) Date of filing: 23.09.2021
(51) Int. Cl.: C25D 3/04, C25D 21/11, C25D 21/12, G01N 22/00

(54) **METHOD FOR DETERMINING THE HEIGHT OF A FOAM BLANKET ON AN ELECTROPLATING COMPOSITION**

(71) Applicant: Atotech Deutschland GmbH & Co. KG, 10553 Berlin (DE)
(72) Inventor: Ross, Thorsten, 10553 Berlin (DE); Sans, Josep, 10553 Berlin (DE)
(74) Representative: Atotech Deutschland GmbH & Co. KG

(57) **Abstract**

The present invention refers to a method for determining the height of a foam blanket on an electroplating composition utilizing a radar signal, as well as a respective use.

## Description

### Field of the Invention

The present invention refers to a method for determining the height of a foam blanket on an electroplating composition utilizing a radar signal, as well as a respective use.

### Background of the Invention

Chromium plating has a far-reaching history for decorative and functional applications. Although starting with hexavalent chromium plating, development of trivalent chromium plating has been started during the last decades in order to replace environmentally problematic hexavalent chromium species. However, hexavalent chromium plating which cannot be replaced so far by trivalent chromium plating is still subject of further developments and improvements.

It is well known that hexavalent chromium plating typically leads to the formation of undesired foam and mist due to the utilization of surfactants (also known as surface-active compounds) and an intensive hydrogen gas formation during plating. Surfactants are typically needed to decrease the surface tension and to intentionally form a foam blanket for mist suppression on a respective electroplating composition. However, if uncontrolled, in particular if too much surfactants are utilized, foaming can lead up to a foam blanket with various thicknesses and an overall too high height. This is problematic because the foam blanket can incorporate in its bubbles a large amount of the hydrogen gas. If too much hydrogen gas is bound in such a way, danger of explosion is very high.

Since hexavalent chromium plating is health threatening too, it is very important to maintain the foam blanket in such a way that the electroplating composition is fully covered with the foam blanket such that no mist is escaping and, at the same time, is evenly distributed over the entire electroplating bath with a thickness as much as absolutely necessary.

It is therefore desired to somehow control the foam blanket in such a way that it remains very constant, in particular its height.

US 5,597,950 A refers to a device for monitoring the presence or absence of active surfactant or other surface-active agents in a solution. The device detects the formation of foam with a light beam.

US 10,857,486 B2 refers to a device which is capable of ongoing measurement of variable foaming tendencies in a fluid system and provide a signal to regulate the feed rate of defoamer accordingly to maintain foaming at an acceptable target level. The regulation of feed can be accomplished automatically or manually.

However, particularly hexavalent chromium electroplating compositions are very demanding. The foam created in such a composition typically has an orange colour due to the presence of chromic acid. This furthermore affects the foam in such a way that typical means for determining a foam height, such as light including laser light, does not adequately allows a suitable interaction with the foam. In many cases such a light is too much absorbed or scattered such that no reflected signal is received on a sensor detector.

Thus, there is a demand to provide further improved methods to determine the height of a foam blanket on an electroplating composition, particularly on a hexavalent chromium electroplating composition.

### Objective of the present Invention

It was therefore the objective of the present invention to provide an improved method for determining the height of a foam blanket on an electroplating composition, which is more universally applicable. This means that it is not only applicable to electroplating compositions with a typically white (or at least bright) foam blanket but likewise to more demanding electroplating compositions having a strongly coloured foam blanket with sometimes a comparatively dense foam blanket (as in case of a hexavalent chromium electroplating composition). In other words, it is the objective to provide an improved method, which is more independent of the characteristic of the foam blanket on the electroplating bath and therefore more variably utilizable.

Furthermore, it is the objective of the present invention to provide an improved method that can be more universally applied to electroplating compositions typically forming a comparatively thin foam blanket. As a general rule, the thinner the foam blanket the more difficult the determination of its height.

### Summary of the Invention

The objectives mentioned above are solved by a method for determining the height of a foam blanket on an electroplating composition, the method comprising the steps:
(a) providing in an electroplating compartment the electroplating composition,
(b) providing an analysis compartment separated from the electroplating compartment, the analysis compartment comprising
   (i) means for blowing in a gas, and
   (ii) a radar emitter and radar sensor,
(c) separating a portion of the electroplating composition and transferring said portion into the analysis compartment such that the analysis compartment is filled with said portion at a constant filling level,
(d) in the analysis compartment, contacting the separated portion with the gas such that foam is created with a height, and
(e) emitting a radar signal from the radar emitter onto the created foam and receiving a reflected radar signal on the radar sensor such that the height of the foam is determined.

Own experiments have shown (see Example below) that with a radar signal, preferably as defined throughout the present text, most preferably defined as being preferred, even a demanding and sophisticated, in particular colored foam blanket, can be excellently monitored and its height can be constantly determined. This is particularly helpful in case of a hexavalent chromium electroplating composition. However, the method of the present invention is more universally applicable, i.e. also to other electroplating compositions forming and/or requiring a foam blanket. It has been shown that particularly radar signals get very strongly reflected with little absorption, which is very helpful for a reliable and stable signal detection. In contrast, a reliable measurement was not possible with typical state of the art means, such as light, including laser light, which were too strongly scattered and/or absorbed.

Own experiments have shown that a carefully controlled and monitored foam blanket, particularly in case of a hexavalent chromium electroplating composition, well protects the environment of poisonous hexavalent chromium mist and at the same time keeps the risk of too much hydrogen gas accumulation under control.

Thus, it is much desired to control the foam blanket to (i) prevent an under-foaming as well as an (ii) over-foaming. In case of (i), undesired mist can evaporate and contaminate the environment as well as cause illness of people working in the vicinity of such an electroplating composition. In case of (ii), a too thick foam blanket can accumulate too much hydrogen gas, which dramatically increases the risk of explosion.

In addition, a radar signal is less susceptible to mist and air pollution within the analysis compartment and is more independent of the nature of the created foam. While a light signal, in particular a laser signal, is easily scattered on the way from the emitter to the created foam and upon hitting the created foam, a radar signal is significantly less affected and therefore provides more reliable results.

### Detailed Description of the Invention

In the context of the present invention, the terms "at least one", "one or more", or "one or more than one" denote (and are exchangeable with) "one, two, three or more" and "one, two, three or more than three", respectively, if appropriate.

The term "substantially free of" denotes insignificant amounts thereof, not affecting the various aspects of the present invention. The term "does not comprise" typically denotes that the total amount of such compounds and ingredients is below the detection range of state-of-the-art measurement equipment, and most preferably is not present at all.

### The electroplating composition in the electroplating compartment:

The electroplating composition utilized in the method of the present invention (i.e. provided in step (a)) is preferably for plating a functional chromium layer. Preferably, in the electroplating compartment, a functional chromium layer, preferably a hard, wear-resistant functional chromium layer is obtained as a result of a respective electroplating process.

In some cases, the electroplating composition utilized in the method of the present invention is preferably for plating a decorative chromium layer. Respectively, in the electroplating compartment preferably a decorative chromium layer is obtained as a result of the electroplating process.

If not explicitly stated otherwise, the features regarding the method of the present invention preferably apply to functional as well as to decorative applications.

More preferred is a method of the present invention, wherein in step (a) the electroplating composition comprises chromium, preferably is a chromium electroplating composition.

Even more preferred is a method of the present invention, wherein in step (a) the electroplating composition is a trivalent chromium electroplating composition or a hexavalent chromium electroplating composition, preferably a hexavalent chromium electroplating composition.

Although a foam blanket of a trivalent chromium electroplating composition does not show the typical orange-color as in case of a foam blanket of a hexavalent chromium electroplating composition, the principle utilized in the method of the present invention is preferably likewise applicable.

In some cases, a method of the present invention is preferred, wherein the electroplating composition comprises zinc. Thus, preferably the electroplating composition is a zinc or zinc alloy (e.g. nickel, iron as alloying element) electroplating composition.

In some cases, a method of the present invention is preferred, wherein the electroplating composition comprises aluminum. Thus, preferably the electroplating composition is an aluminum or aluminum alloy electroplating composition.

In some cases, a method of the present invention is preferred, wherein the electroplating composition comprises nickel. Thus, preferably the electroplating composition is a nickel or nickel alloy electroplating composition.

In some cases, a method of the present invention is preferred, wherein the electroplating composition comprises copper. Thus, preferably the electroplating composition is a copper or copper alloy electroplating composition.

Preferred is a method of the present invention, wherein the electroplating composition is an aqueous electroplating composition, most preferably comprising more than 50 vol.-% water, based on the total volume of the electroplating composition.

Preferred is a method of the present invention, wherein the electroplating composition is acidic or alkaline, preferably acid, most preferably acidic if it is a chromium electroplating composition. This means, the pH is preferably 5 or below, more preferably 4 or below, even more preferably 3 or below, yet even more preferably 2 or below, most preferably 1 or below, even most preferably zero or below.

### Foam-creating compound in the electroplating composition:

Preferred is a method of the present invention, wherein the electroplating composition comprises one or more than one foam-creating compound, preferably one or more than one surfactant.

More preferred is a method of the present invention, wherein the one or more than one foam-creating compound comprises one or more than one betaine. More preferably, the one or more than one betaine is surface-active, most preferably leading to a surface tension of 40 mN/m or less, referenced to DI water having a surface tension of 70 mN/m or more, preferably of 39 mN/m or less, more preferably of 37 mN/m or less. Most preferably this is referenced to a concentration of 30 mg/L of said one or more than one betaine. Preferably, said one or more than one betaine is leading to a surface tension of not less than 36 mN/m.

Preferably, the one or more than one betaine comprises a quaternary nitrogen. The quaternary nitrogen is preferably charged with a positive charge. Most preferably, the positive charge cannot be removed by deprotonation. This means that the positive charge is stabilized.

Preferred is a method of the present invention, wherein the quaternary nitrogen has substituents such that said positive charge is permanently stabilized, with the proviso that the substituents are not hydrogen. Preferably, said substituents comprise at least organic residues, preferably alkyl residues, ester residues, carboxy alkyl residues, and/or amide residues. Preferably, the alkyl residues, ester residues, carboxy alkyl residues, and amide residues each individually comprise 1 to 20 carbon atoms.

Preferably, the one or more than one betaine independently comprises further a sulfonate group and/or carboxylate group, preferably a sulfonate group. Said group is preferably charged with a negative charge.

Preferred is a method of the present invention, wherein the one or more than one betaine has a neutral net charge.

Preferred is a method of the present invention, wherein said one or more than one betaine independently comprises at least 5 carbon atoms, preferably at least 7 carbon atoms, more preferably at least 9 carbon atoms, even more preferably at least 11 carbon atoms, yet even more preferably at least 12 carbon atoms, most preferably at least 14 carbon atoms. Preferably, said one or more than one betaine has not more than 50 carbon atoms.

Preferred is a method of the present invention, wherein said one or more than one betaine comprises at least a compound of formula (I)

(R¹)N⁺(R²R³)-X-Y (I),

wherein independently
R¹ denotes alkyl, alkyl ester, or alkyl amid, preferably alkyl;
R² and R³ denote a C1-C5 linear or branched alkyl, preferably a C1-C5 linear alkyl;
X denotes a divalent moiety; and
Y denotes a sulfonic acid group or a carboxylic acid group, preferably a sulfonic acid group.

Preferably, R¹ is branched or linear, preferably linear.

Preferably, R¹ comprises 4 to 26 carbon atoms, preferably 6 to 24, more preferably 8 to 20, most preferably 12 to 18. Most preferably, R¹ comprises 18 carbon atoms.

Preferably, R²and R³ independently comprise 1 to 4 carbon atoms, preferably 1 to 3 carbon atoms, more preferably 1 or 2 carbon atoms, most preferably 1 carbon atom.

Preferably, X comprises 1 to 8 carbon atoms, preferably 1 to 6 carbon atoms, more preferably 2 to 4 carbon atoms, most preferably 3 or 4 carbon atoms.

More preferably, X denotes an alkylene moiety, hydroxy-alkylene moiety, or alkoxylene moiety, preferably an alkylene moiety. Most preferably, X denotes propylene, preferably linear propylene.

Preferred is a method of the present invention, wherein independently
R¹ denotes a C16-C18 linear alkyl, preferably a C18 linear alkyl;
R² and R³ denote methyl or ethyl, preferably methyl;
X denotes a C2-C4 alkylene moiety, preferably a C3 alkylene moiety; and
Y denotes a sulfonic acid group.

More preferred is a method of the present invention, wherein said one or more than one betaine is a sulfobetaine.

Even more preferred is a method of the present invention, wherein the one or more than one foam-creating compound, most preferably said one or more than one betaine, at least comprises one or more than one (preferably one) compound out of the group consisting of N,N-Dimethyl-N-(3-cocoamidopropyl)-N-(2-hydroxy-3-sulfopropyl) ammonium betaine, N-Dodecyl-N,N-dimethyl-3-ammonio-1-propanesulfonate, N-Octyl-N,N-dimethyl-3-ammonio-1-propanesulfonate, N-Decyl-N,N-dimethyl-3-ammonio-1-propanesulfonate, N-Dodecyl-N,N-dimethyl-3-ammonio-1-propanesulfonate, N-Tetradecyl-N,N-dimethyl-3-ammonio-1-propanesulfonate, N-Hexadecyl-N,N-dimethyl-3-ammonio-1-propanesulfonate, N-Octadecyl-N,N-dimethyl-3-ammonio-1-propanesulfonate, and N,N-Dimethyl-N-dodecylglycine betaine.

Preferred is a method of the present invention, wherein the one or more than one foam-creating compound, most preferably said one or more than one betaine, has a total concentration ranging from 0.0005 g/L to 1 g/L, based on the total volume of the electroplating composition, preferably from 0.001 g/L to 0.5 g/L, more preferably from 0.005 g/L to 0.3 g/L, and most preferably from 0.01 g/L to 0.2 g/L.

Preferred is a method of the present invention, wherein the one or more than one foam-creating compound does not comprise fluorine atoms. In other words, said one or more than one foam-creating compound is not fluorinated and not perfluorinated but rather fluorine-free.

Above mentioned one or more than one foam-creating compound preferably forms the foam blanket on the electroplating composition as well as the created foam in step (d).

### Anti-foam compound in the electroplating composition:

Preferred is a method if the present invention, wherein the electroplating composition further comprises one or more than one anti-foam compound, preferably one or more than one organosiloxane, most preferably one or more than one poly-organosiloxane. Thus, preferred organosiloxane and poly-organosiloxane, respectively, are preferred anti-foam compounds.

In the context of the present invention, the one or more than one foam-creating compound and the one or more than one anti-foam compound are distinct from each other.

The anti-foam compound preferably represents a regulation means to regulate the thickness and density of the foam blanket. Thus, it is not only a means to counter overdosing of the one or more than one foam-creating compound but preferably also regulates the density of the foam by affecting the bubble size in the foam blanket.

Preferably, the one or more than one poly-organosiloxane is crosslinked, more preferably is at least 2-dimenionally crosslinked, most preferably is 3-dimensionally crosslinked.

Preferably, the one or more than one poly-organosiloxane is crosslinked via vinyl moieties.

Preferred is a method of the present invention, wherein in the electroplating composition the one or more than one poly-organosiloxane is a 3D-siloxane, i.e. a 3D poly-organosiloxan. They are for example available from Münzing Chemie GmbH.

More preferably, the one or more than one anti-foam compound, more preferably the one or more than one poly-organosiloxane, is surface-active, wherein most preferably the one or more than one anti-foam compound, preferably the one or more than one poly-organosiloxane, on its own is less surface-active compared to said one or more than one foam-creating compound, preferably said one or more than one betaine, in terms of reducing the surface tension, referenced to water without any surface-active compound.

Most preferably, the one or more than one poly-organosiloxane and said one or more than one betaine are together synergistically more surface-active in terms of reducing surface tension, referenced to water without any surface-active compound, than each one on its own.

Preferably, the one or more than one anti-foam compound, more preferably the one or more than one poly-organosiloxane, is non-ionic.

Preferred is a method of the present invention, wherein in the electroplating composition the anti-foam compound, preferably the one or more than one poly-organosiloxane, has a total concentration ranging from 0.01 mg/L to 5000 mg/L, based on the total volume of the electroplating composition, preferably from 0.05 mg/L to 3000 mg/L, more preferably from 0.1 mg/L to 1500 mg/L, even more preferably from 0.15 mg/L to 1000 mg/L, yet even more preferably from 0.2 mg/L to 500 mg/L, most preferably from 0.25 mg/L to 150 mg/L.

More preferred is a method of the present invention, wherein in the electroplating composition the anti-foam compound, preferably the one or more than one poly-organosiloxane, has a total concentration ranging from 0.01 mg/L to 100 mg/L, based on the total volume of the electroplating composition, preferably from 0.05 mg/L to 70 mg/L, more preferably from 0.1 mg/L to 50 mg/L, even more preferably from 0.15 mg/L to 25 mg/L, yet even more preferably from 0.2 mg/L to 10 mg/L, most preferably from 0.3 mg/L to 5 mg/L.

Preferably, the one or more than one poly-organosiloxane comprises one or more than one, preferably more than one, vinyl moiety. More preferably, the one or more than one poly-organosiloxane comprises at least one vinyl moiety comprising an unsaturated double-bond, while other vinyl moieties are involved in a cross-linking such that their double-bonds are no longer present. This preferably means that the poly-organosiloxane utilized in the method of the present invention is partially cross-linked via vinyl moieties, wherein not all vinyl moieties are used for cross-linking.

Preferably, the one or more than one anti-foam compound, more preferably the one or more than one poly-organosiloxane comprises, preferably consists of, carbon atoms, hydrogen atoms, silicon atoms, and oxygen atoms.

Preferably, the one or more than one anti-foam compound, more preferably the one or more than one poly-organosiloxane, does not comprise nitrogen atoms.

Preferably, the one or more than one anti-foam compound, more preferably the one or more than one poly-organosiloxane, does not comprise sulfur atoms.

Preferably, the one or more than one anti-foam compound, more preferably the one or more than one poly-organosiloxane, does not comprise fluorine atoms. In other words, said one or more than one poly-organosiloxane is not fluorinated and not perfluorinated.

### Further compounds in and features of the electroplating composition:

Preferred is a method of the present invention, wherein the electroplating composition further comprises at least one emulsifier. It preferably emulsifies the one or more than one anti-foam compound, more preferably the one or more than one poly-organosiloxane, in the electroplating composition. Thus, the emulsifier is preferably for emulsifying the one or more than one poly-organosiloxane in an aqueous solution.

Preferably, the electroplating composition does not show any phase separation, floating surface droplets, oil surface-film formation, and/or density gradients.

In some cases, preferred is a method of the present invention, wherein the electroplating composition is substantially free of, preferably does not comprise, polydimethylsiloxane, most preferably is substantially free of, preferably does not comprise, a silicone oil. However, in some other cases this might be preferred.

The combination of above mentioned one or more than one foam-creating compound with the one or more than one anti-foam compound results in a surface tension of the electroplating composition; in a sense of an overall average surface tension.

Preferred is a method of the present invention, wherein the electroplating composition has a surface tension of 50 mN/m or less, based on a measurement with a tensiometer, preferably of 45 mN/m or less, more preferably of 40 mN/m or less, even more preferably of 38 mN/m or less, yet even more preferably of 36 mN/m or less, most preferably of 35 mN/m or less. In some cases, most preferably of 34 mN/m or less or 33 mN/m or less. In the context of the present invention, it is most preferred that the tensiometer utilizes a Wilhelmy plate for determining the surface tension.

More preferred is a method of the present invention, wherein the electroplating composition has a surface tension ranging from 28 mN/m to 40 mN/m, based on a measurement with a tensiometer, preferably from 30 mN/m to 38 mN/m, most preferably from 31 mN/m to 36 mN/m.

Preferred is a method of the present invention, wherein the foam blanket on the electroplating composition in the electroplating compartment covers more than 50% of the coverable surface of the electroplating composition with said foam blanket, preferably having a thickness ranging from 0.5 cm to 6 cm, preferably from 1 cm to 3 cm. This preferably applies to both functional and decorative applications.

More preferred is a method of the present invention, wherein the foam blanket on the electroplating composition in the electroplating compartment covers more than 60% of the coverable surface of the electroplating composition with said foam blanket, preferably more than 70%, even more preferably more than 80%, yet even more preferably more than 90%, most preferably more than 95%, even most preferably the entire coverable surface of the electroplating composition is covered with said foam blanket. This most preferably applies to the preferred height of the foam blanket ranging from 0.5 cm to 6 cm, preferably from 1 cm to 3 cm. This preferably applies to both functional and decorative applications.

Preferred is a method of the present invention, wherein the electroplating composition further comprises sulfate ions, preferably in a concentration ranging from 0.1 g/L to 10 g/L, based on the total volume of the electroplating composition, preferably from 1 g/L to 8.5 g/L, more preferably from 1.5 g/L to 7.5 g/L, even more preferably from 2 g/L to 6.5 g/L, most preferably from 3 g/L to 5 g/L.

Preferred is a method of the present invention, wherein the electroplating composition comprises one or more than one sulfonic acid and/or salts thereof with two, three or more than three sulfonic acid groups, preferably one or more than one alkylsulfonic acid and/or salts thereof with two, three or more than three sulfonic acid groups.

Preferred is a method of the present invention, wherein the electroplating composition further optionally comprises silver ions, preferably comprises silver ions, more preferably in a total concentration ranging from 0.0001 g/L to 3 g/L, based on the total volume of the electroplating composition, preferably from 0.001 g/L to 1 g/L, most preferably from 0.01 g/L to 0.3 g/L. This most preferably applies to functional applications.

Preferred is a method of the present invention, wherein the electroplating composition is substantially free of, preferably does not comprise, a fluorinated foam-creating organic compound, most preferably is substantially free of, preferably does not comprise, fluorinated organic compounds.

However, this does not exclude the use of significantly less problematic inorganic fluorine-compounds such as fluoride anions. Thus, preferred is in some cases a method of the present invention, wherein the electroplating composition further comprises fluoride anions. This most preferably applies to decorative applications.

Preferred is a method of the present invention, wherein the electroplating composition further comprises a fluorine-comprising inorganic compound, preferably a fluoro-silicate, most preferably SiF₆. This most preferably applies to decorative applications in order to increase gloss and uniformity of the respective decorative chromium layer and therefore improves the optical appearance.

Preferably the fluorine-comprising inorganic compound (preferably the fluoro-silicate, most preferably the SiF₆) has a total concentration ranging from 0.2 g/L to 2 g/L, based on the total volume of the electroplating composition.

### Analysis compartment and method for determining the hight of the foam blanket:

The method of the present invention is for determining the height of a foam blanket on an electroplating composition, preferably an electroplating composition as defined above.

Preferably the electroplating composition in the electroplating compartment has a foam blanket. In the context of the present invention, the foam created in step (d) of the method of the present invention represents the foam blanket that is present or would be obtained upon utilization of the electroplating composition in the electroplating compartment (i.e. upon electroplating substrates). As a matter of fact, the method of the present invention preferably does not rely on any active utilization of the electroplating composition. This means, the height of the foam blanket can be determined even if the electroplating composition is not in use in the electroplating compartment.

Preferably, the analysis compartment has a certain size, i.e. dimension such that the created foam has sufficient space to form a form-stable foam blanket. Preferably, the separated electroplating composition forms a surface area of at least 100 cm², preferably of at least 150 cm², more preferably of at least 200 cm², most preferably of at least 220 cm². Preferably, the surface area is ranging from 100 cm² to 1000 cm², more preferably from 150 cm² to 800 cm², more preferably from 200 cm² to 600 cm², most preferably from 220 cm² to 400 cm².

The analysis compartment is separated from the electroplating compartment and comprises (i) means for blowing in a gas.

Preferred is a method of the present invention, wherein in step (b) the means for blowing in the gas comprises a valve, preferably a ball valve or a needle valve, most preferably a needle valve. This valve is designed to pass through the gas, preferably with pressure. Most preferred is a needle valve to obtain a high precision gas flowthrough.

Basically, the gas can be any gas as long as it is suitable in the context of the entire method, including an electroplating process. However, preferred is a method of the present invention, wherein in step (b) the gas comprises an inert gas and/or ambient air, preferably ambient air. A preferred inert gas comprises nitrogen, preferably is nitrogen gas. An inert gas provides the advantage that no oxidative interaction with the electroplating composition takes place. This is particularly relevant if the separated portion is returned into the electroplating compartment. In contrast, ambient air is widely available and cost efficient although its oxygen can have an oxidative influence. However, it typically fully serves the purpose of the method of the present invention and is therefore very preferred.

Preferred is a method of the present invention, wherein in step (d) the gas is blown in with a flow rate ranging from 0.1 L/h to 7 L/h (denoting liter per hour), preferably from 0.4 L/h to 5.5 L/h, more preferably from 0.6 L/h to 4 L/h, even more preferably from 0.9 L/h to 3 L/h, most preferably from 1 L/h to 2.5 L/h. A respective device is respectively adapted.

Preferred is a method of the present invention, wherein the analysis compartment comprises a filter, preferably a glass filter. Most preferably, said filter is arranged in such a way that at least the blown in gas is blown trough said filter such that the foam is created in step (d). Most preferably, the filter is solid.

The analysis compartment furthermore preferably comprises a pipe for transferring the portion of the electroplating composition into the analysis compartment. More preferably, the pipe is regulated in terms of flow rate. Most preferably, the pipe is connected to a pump, such that said portion of the electroplating composition is reaching the analysis compartment preferably with a pressure. Preferably, the pump is a diaphragm pump. Thus, said separated portion is preferably actively transferred into the analysis compartment. Most preferably, the separated portion is transferred with a constant flow rate.

Preferred is a method of the present invention, wherein in step (c) the portion is separated continually or in intervals, preferably continually.

More preferred is a method of the present invention, wherein steps (c) to (e) of the method of the present invention are carried out continually; i.e. preferably repeatedly.

Most preferred is a method of the present invention, wherein the entire method of the present invention is carried out continually; i.e. preferably repeatedly.

Preferred is a method of the present invention, wherein in step (c) said portion is transferred into the analysis compartment with a flow rate ranging from 0.5 L/h to 10 L/h (denoting liter per hour), preferably from 1 L/h to 9 L/h, more preferably from 2 L/h to 8 L/h, even more preferably from 3 L/h to 7 L/h, most preferably from 4 L/h to 6 L/h. A respective device is respectively adapted.

Upon transferring the separated portion into the analysis compartment, the analysis compartment is filled with said portion to a certain level, which is maintained throughout the method. Thus, the analysis compartment comprises a constant filling level. Preferably, this constant filling level is obtained by using an overflow, which allows to return superfluous electroplating composition into the electroplating compartment. Thus, preferred is a method of the present invention, wherein the analysis compartment comprises an overflow, preferably fluidically connected with the electroplating compartment.

The essential feature in the analysis compartment is (ii) the radar emitter and radar sensor. It turned out that by means of these devices the technical demands even for a hexavalent chromium electroplating composition can be met, most particularly for comparatively thin foam heights. Furthermore, such an emitter and sensor, respectively, can be utilized for determining the height of a foam blanket on other electroplating compositions, even other than chromium electroplating compositions.

Preferred is a method of the present invention, wherein the radar emitter is located above the foam created in step (d).

Preferred is a method of the present invention, wherein the radar emitter is emitting the radar signal vertically onto the created foam, most preferably vertically and perpendicular to the created foam.

Most preferred is a method of the present invention, wherein in step (b) the radar emitter is located above the foam and in step (e) is vertically emitting the radar signal perpendicular to the foam.

Preferred is a method of the present invention, wherein in step (e) the emitted radar signal has a frequency ranging from 10 GHz to 150 GHz, preferably from 20 GHz to 125 GHz, more preferably from 35 GHz to 110 GHz, even more preferably from 50 GHz to 100 GHz, yet even more preferably from 60 GHz to 95 GHz, most preferably from 70 GHz to 90 GHz, yet even most preferably from 75 GHz to 85 GHz. The radar emitter is respectively adapted to provide such a signal.

In some cases, preferred is a method of the present invention, wherein in step (e) the emitted radar signal has a frequency ranging from 75 GHz to 110 GHz, preferably from 77 GHz to 100 GHz, more preferably from 79 GHz to 90 GHz. The radar emitter is respectively adapted to provide such a signal.

Preferred is a method of the present invention, wherein in step (e) the emitted radar signal is the basis for a distance measurement, preferably for a surface area-based distance measurement. This is a great advantage over commonly known measurements, e.g. by means of a laser, which is typically covering only a small area spot and is therefore susceptible to local variations of the created foam. In contrast, the emitted radar signal is typically covering a larger surface and therefore provides a surface area-based reflected radar signal as response signal.

Upon reaching the created foam, the emitted radar signal is typically reflected and/or scattered. At least a portion thereof is reflected back onto the radar sensor, most preferably without significant alteration in frequency. In the context of the present invention, the term "radar sensor" corresponds to (and is exchangeable with) the term "radar detector" or "radar signal detector".

The height of the created foam is determined by correlating to each other the constant filling level, which is a fixed height information due to the overflow, and the reflected radar signal, which results in another height information. By determining the difference, most preferably the height of the created foam and the foam blanket, respectively, is determined. Thus, in the context of the present invention, the term "height" of the foam blanket and "height" of the created foam means the thickness thereof (and is preferably interchangeable with it).

Preferred is in some cases a method of the present invention, wherein in step (e) the emitted radar signal and the reflected radar signal have an identical frequency within a variation range delta of ±3%.

Preferably, the height of the foam blanket present in the electroplating compartment on the electroplating composition is ranging from 0.5 cm to 6 cm, preferably from 0.7 cm to 5 cm, more preferably from 0.9 cm to 4 cm, most preferably from 1 cm to 3 cm. Most preferably, in the analysis compartment the created foam has a substantially identical height and is therefore representing the foam blanket in the electroplating composition. This is typically guaranteed by adjusting the flow rate of the blown in gas. Thus, preferred is a method of the present invention, wherein in step (e) the foam has a height ranging from 0.5 cm to 6 cm, preferably from 0.7 cm to 5 cm, more preferably from 0.9 cm to 4 cm, most preferably from 1 cm to 3 cm.

Since the desired height of the created foam and the foam blanket, respectively, is typically known, the determined height of the created foam is preferably signaling, whether further foam-creating compound or anti-foam compound is needed, and therefore must be added to the electroplating composition. Thus, preferred is a method of the present invention further comprising step
(f) adding one or more than one foam-creating compound or one or more than one anti-foam compound to the electroplating composition.

More preferred is a method of the present invention, wherein the adding in step (f) is carried out by means of one or more than one pump.

Most preferred is a method of the present invention, wherein the method is automated. Therefore, preferred is a method of the present invention, wherein the adding in step (f) is controlled by a computing device, preferably a computing device communicating at least with the radar sensor. Typically, the radar sensor creates an output signal which is computed in the computing device such that the height of the created foam is determined (i.e. obtained). Based on this height of the foam, the computing device preferably communicates with the one or more than one pump preferably by means of a control signal.

Preferred is a method of the present invention, wherein in step (f) the one or more than one foam-creating compound is added by means of a first pump for pumping said one or more than one foam-creating compound into the electroplating compartment from a first reservoir comprising said one or more than one foam-creating compound. Also preferred is a method of the present invention, wherein in step (f) the one or more than one anti-foam compound is added by means of a second pump for pumping said one or more than one anti-foam compound into the electroplating compartment from a second reservoir comprising said one or more than one anti-foam compound.

Most preferably, the computing device is individually switching on or off said one or more than one pumps, most preferably said first and second pump, and preferably furthermore individually controls flow rates thereof. In such a way, the ratio between the one or more than one foam-creating compound and the one or more than one anti-foam compound is manipulated and adjusted to a desired extent. All this allows to carefully control the height of the foam blanket on the electroplating composition.

Preferably, the control signal is an analog control signal or a digital control signal, preferably an analog control signal. More preferably, the analog control signal comprises a current information or a voltage information. Preferably, the analog control signal is split into two individual signals being different from each other, preferably into a first analog control signal and a second analog control signal, most preferably into a first analog control signal for the first pump and a second analog control signal for the second pump. Most preferably, the analog control signal is transmitted via a cable.

However, in some cases, a method of the present invention is preferred, wherein the control signal is a digital control signal, which preferably is transmitted wirelessly, preferably via wireless LAN and/or Bluetooth, most preferably Bluetooth.

As mentioned above, the electroplating composition preferably comprises already one or more than one fluorine-free foam-creating compound and preferably furthermore one or more than one fluorine-free anti-foam compound. It is therefore also preferred that in step (f) corresponding compounds are added. Thus, preferred is a method of the present invention, wherein in step (f) the one or more than one foam-creating compound and the one or more than one anti-foam compound do not comprise fluorine atoms.

An analysis compartment with preferably a (preferably automatic) dosing unit is very preferred if the foam-creating compound and the anti-foam compound do not comprise any fluorine atoms. Typically, fluorinated/perfluorinated compounds were used in the past, which show a comparatively high intrinsic resistance to very harsh electroplating composition conditions. However, they are more and more under ban and therefore must be replaced with alternative compounds. In many cases such compounds are less resistant and therefore are susceptible to degradation. As a result thereof, a more frequent dosing is required to maintain a constant total concentration of such compounds and a corresponding foam blanket. Thus, an automated monitoring/dosing is helpful, very efficient and most preferred.

The aforementioned regarding the one or more than one foam-creating compound and the one or more than one anti-foam compound preferably applies likewise to the one or more than one foam-creating compound and the one or more than one anti-foam compound added in step (f). More preferred is a method of the present invention, wherein in step (f) the one or more than one foam-creating compound comprises one or more than one betaine and the one or more than one anti-foam compound one or more than one organosiloxane. In particular the aforementioned regarding the one or more than one betaine and the one or more than one organisiloxan preferably applies likewise to the respective compounds added in step (f).

The present invention further relates to a use of a radar signal to determine the height (i.e. a thickness) of a foam blanket on a hexavalent chromium electroplating composition.

The aforementioned regarding the method of the present invention preferably applies likewise to the use of the present invention.

The present invention further relates to a device for determining the height of foam on an electroplating composition, the device comprising an analysis compartment comprising a radar emitter and radar sensor.

The aforementioned regarding the method of the present invention preferably applies likewise to the device of the present invention.

The present invention is described in more detail by the following non-limiting examples.

### Examples

The following electroplating composition was used in an electroplating compartment:
(i) Chromic acid, 250 g/L;
(ii) N-Octadecyl-N,N-dimethyl-3-ammonio-1-propanesulfonate as foam-creating compound;
(iii) emulsified and homogenously distributed 3D-poly-organosiloxane (i.e. a 3D siloxane from Münzing Chemie GmbH) as the anti-foam compound;
(iv) Sulfate ions, 2 to 5 g/L (added as sulfuric acid);
(v) Methane-di-sulfonic acid, 1.5 to 10 g/L;
pH strongly acidic

A portion of the electroplating composition was continually separated and transferred (5 L/h) into an analysis compartment, which was designed as a separate unit. The analysis compartment comprised a pipe, which was fluidically connected with the electroplating compartment such that said portion of the electroplating composition could reach the analysis compartment by help of an electrical diaphragm pump.

The analysis compartment further comprised an overflow to maintain a constant filling level in the analysis compartment. Superfluous electroplating composition was returned into the electroplating compartment.

The analysis compartment further comprised a needle valve as means for blowing in a gas, which was in this particular case ambient air. A flow rate in a range from 0.5 L/h to 4 L/h was tested, wherein a range of 1 L/h to 2 L/h was determined as optimal. With help of the ambient air, foam was continually created with a certain height in the analysis compartment.

A radar emitter (80 GHz; VEGAPULS C 21) including a radar sensor was used above the created foam. The emitted and reflected radar signal run vertically and perpendicular to the created foam, which was formed on the surface of the separated portion through said ambient air.

The created foam continually had a height of about 1 cm. This was obtained with a continuous flow of 0.15 mL/L/h (based on the total volume of the electroplating composition) of the foam-creating compound in combination with a continuous flow of 0.075 mL/L/h (based on the total volume of the electroplating composition) of the anti-foam compound.

It turned out that by means of the method of the present invention such a continuous and low-volume dosing is excellently accomplished. In such a way, the continuous decomposition of fluorine-free organic compounds was compensated without compromising a stable foam blanket in the electroplating compartment.

A computing device was electronically communicating with the radar emitter and/or radar sensor to automatically control a first pump for adding foam-creating compound and a second pump for adding anti-foam compound to the electroplating composition. The computing device was preferably already integrated in the housing of the radar emitter (VEGAPULS).

In the electroplating compartment, electroplating was carried out with steel substrates (rods) at a current density of about 50 A/dm², at a temperature of about 55°C, for about 5 to 7 hours to obtain a respective hard and wear-resistant chromium layer.

The foam created on the separated portion of electroplating composition nicely corresponded to the foam blanket present on the electroplating composition in the electroplating compartment (i.e. having an identical height).

It is a further advantage that the height of the foam blanket can be even determined if the electroplating composition in the electroplating compartment was not even in active use. Since the analysis compartment only requires a small portion of the electroplating composition, a reliable information about the ratio between the foam-creating compound and the anti-foam compound can be still obtained.

In a comparative example, the radar emitter was replaced with a laser. However, no reliable signal was detected. It is assumed that a laser provides a too much focused beam, which is not in the position to reliably detect an overall condition on the surface of the separated portion.

## Claims

1. A method for determining the height of a foam blanket on an electroplating composition, the method comprising the steps:
(a) providing in an electroplating compartment the electroplating composition,
(b) providing an analysis compartment separated from the electroplating compartment, the analysis compartment comprising
(i) means for blowing in a gas, and
(ii) a radar emitter and radar sensor,
(c) separating a portion of the electroplating composition and transferring said portion into the analysis compartment such that the analysis compartment is filled with said portion at a constant filling level,
(d) in the analysis compartment, contacting the separated portion with the gas such that foam is created with a height, and
(e) emitting a radar signal from the radar emitter onto the created foam and receiving a reflected radar signal on the radar sensor such that the height of the foam is determined.

2. The method of claim 1, wherein in step (a) the electroplating composition is a trivalent chromium electroplating composition or a hexavalent chromium electroplating composition, preferably a hexavalent chromium electroplating composition.

3. The method of claim 1 or 2, wherein in step (b) the means for blowing in the gas comprises a valve, preferably a ball valve or a needle valve, most preferably a needle valve.

4. The method of any one of claims 1 to 3, wherein in step (b) the gas comprises an inert gas and/or ambient air, preferably ambient air.

5. The method of any one of claims 1 to 4, wherein in step (b) the radar emitter is located above the foam and in step (e) is vertically emitting the radar signal perpendicular to the foam.

6. The method of any one of claims 1 to 5, wherein in step (c) the portion is separated continually or in intervals, preferably continually.

7. The method of any one of claims 1 to 6, wherein in step (d) the gas is blown in with a flow rate ranging from 0.1 L/h to 7 L/h, preferably from 0.4 L/h to 5.5 L/h, more preferably from 0.6 L/h to 4 L/h, even more preferably from 0.9 L/h to 3 L/h, most preferably from 1 L/h to 2.5 L/h.

8. The method of any one of claims 1 to 7, wherein in step (e) the emitted radar signal has a frequency ranging from 10 GHz to 150 GHz, preferably from 20 GHz to 125 GHz, more preferably from 35 GHz to 110 GHz, even more preferably from 50 GHz to 100 GHz, yet even more preferably from 60 GHz to 95 GHz, most preferably from 70 GHz to 90 GHz, yet even most preferably from 75 GHz to 85 GHz.

9. The method of any one of claims 1 to 8, wherein in step (e) the emitted radar signal is the basis for a distance measurement, preferably for a surface area-based distance measurement.

10. The method of any one of claims 1 to 9, wherein in step (e) the foam has a height ranging from 0.5 cm to 6 cm, preferably from 0.7 cm to 5 cm, more preferably from 0.9 cm to 4 cm, most preferably from 1 cm to 3 cm.

11. The method of any one of claims 1 to 9 further comprising step (f) adding one or more than one foam-creating compound or one or more than one anti-foam compound to the electroplating composition.

12. The method of claim 11, wherein in step (f) the one or more than one foam-creating compound and the one or more than one anti-foam compound do not comprise fluorine atoms.

13. The method of any of claims 11 or 12, wherein in step (f) the one or more than one foam-creating compound comprises one or more than one betaine and the one or more than one anti-foam compound one or more than one organosiloxane.

14. A use of a radar signal to determine the height of a foam blanket on a hexavalent chromium electroplating composition.

15. A device for determining the height of foam on an electroplating composition, the device comprising an analysis compartment comprising a radar emitter and radar sensor.
